# EUROPÄISCHE PATENTANMELDUNG

(11) **EP 4 309 983 A2**
(43) Veröffentlichungstag der Anmeldung: **24.01.2024**
(21) Anmeldenummer: 23180268.7
(22) Anmeldetag: 20.06.2023
(51) Int. Cl.: B62K 5/027, B62K 5/05, B62K 13/04, B62H 1/12

(54) **DREIRÄDRIGES FAHRZEUG UND UMRÜSTEINHEIT FÜR EIN FAHRZEUG**

(30) Priorität: 30.06.2022 DE 202022116334 U
(71) Anmelder: Concept 16 GmbH, 97230 Estenfeld (DE)
(72) Erfinder: Campanozzi, Nunzio, 97783 Weyersfeld (DE)
(74) Vertreter: Gleim, Christian Ragnar

(57) **Zusammenfassung**

Dreirädriges Fahrzeug 1 mit zwei Vorderrädern 21, 22 und einer Hinterachseinheit 6 zur Befestigung eines außenliegenden Radpaares 31, 32, welches jeweils in einem Abstand zum Untergrund angeordnet ist, um zulassungsrechtlich nicht als Rad zu gelten, und eines innenliegenden Radpaares 41, 42, welches einen geringen Abstand zueinander hat, um zulassungsrechtlich als ein einziges Rad zu gelten.

## Beschreibung

Die Erfindung betrifft ein dreirädriges Fahrzeug und eine Umrüsteinheit für ein Fahrzeug gemäß dem jeweiligen unabhängigen Anspruch.

Die Erfindung betrifft das technische Gebiet von Kraftfahrzeugen bzw. der Umrüstung von Kraftfahrzeugen auf dreirädrige Fahrzeuge im Sinne der Fahrzeugzulassungsverordnung, die mit der EU-Führerscheinklasse A1 bewegt werden dürfen.

Es ist bekannt, auf Basis eines ursprünglich vierrädrigen Fahrzeuges ein dreirädriges Fahrzeug herzustellen, welches, eine entsprechende Drosselung des Motors auf die erlaubten maximal 15 kW Leistung vorausgesetzt, auch mit Führerscheinklasse A1 gefahren werden darf.

Ein Verfahren zur Umrüstung eines Fahrzeugs ist aus der EP 2 899 103 B1 bekannt. Darin wird beschrieben, herkömmliche vierrädrige Fahrzeuge umzurüsten, indem die Hinterachse ausgebaut wird. Die Radkästen werden nach innen verbreitert. Dabei kann durch Entfernen der ursprünglichen Kofferraumwanne nach innen Platz für die neuen Hinterräder geschaffen werden. Dann wird eine neue Hinterachse mit zwei in geringem Abstand zueinander angeordneten Rädern, die zulassungsrechtlich als ein Rad gelten, eingebaut. Die neue Hinterachse wird an den Aufnahmepunkten der ursprünglichen Hinterachse befestigt.

Nachteilig daran ist, dass diese Fahrzeuge instabil sind und beim Überschreiten einer bestimmten Geschwindigkeit, vor allem bei der Kurvenfahrt, kann das Fahrzeug kippen. Ein weiterer Nachteil technischer und wirtschaftlicher Art besteht darin, dass die Umbauten sehr aufwendig und teuer sind, weil die Hinterachse komplett ausgebaut und nicht wiederverwendet wird.

Des Weiteren ist die FR 647 441 A aus dem Stand der Technik bekannt.

Die Aufgabe der Erfindung ist es, ein dreirädriges Fahrzeug und eine Umrüsteinheit für ein Fahrzeug bereitzustellen, um die Nachteile im Stand der Technik zu überwinden und wobei insbesondere die Sicherheit erhöht wird.

Diese Aufgabe wird durch ein dreirädriges Fahrzeug sowie eine Umrüsteinheit gemäß dem unabhängigen Anspruch gelöst. Der Gegenstand der abhängigen Ansprüche betrifft vorteilhafte Ausgestaltungen.

Die Erfindung umfasst ein dreirädriges Fahrzeug (Kraftfahrzeug) mit zwei Vorderrädern und einer Hinterachseinheit zur Befestigung eines außenliegenden Radpaares, welches jeweils in einem Abstand zum Untergrund angeordnet ist, um zulassungsrechtlich nicht als Rad zu gelten, und eines innenliegenden Radpaares, welches einen geringen Abstand zueinander hat, um zulassungsrechtlich als ein einziges Rad zu gelten. Auf diese Art und Weise, insbesondere aufgrund der außenliegenden Stützräder, wird ein dreirädriges Fahrzeug bereitgestellt, das die Nachteile im Stand der Technik überwindet, weil die außenliegenden Räder im Falle eines Kippens mit dem Boden in Kontakt gelangen und das Fahrzeug abstützen (Wirkung von Stützrädern).

Bevorzugt ist das außenliegende Radpaar in einem Abstand im Bereich von 1 cm bis 20 cm, insbesondere im Bereich von 6 cm bis 10 cm, zum Untergrund angeordnet. Der Abstand ergibt sich gegenüber einer geraden Fläche, wenn das Fahrzeug auf den innenliegenden Rädern abgestellt ist.

Ferner bevorzugt ist das innenliegende Radpaar in einem Abstand der Laufflächen im Bereich von 20 cm bis 50 cm, insbesondere im Bereich von 30 cm bis 46 cm, zum Untergrund angeordnet ist. Der Abstand der Laufflächen ergibt sich gegenüber einer Mittelachse der Laufflächen, wenn das Fahrzeug auf den innenliegenden Rädern abgestellt ist.

Vorteilhafterweise ist an der Hinterachseinheit eine Radaufnahme für das außenliegende Radpaar und zwei Radträgerelemente, an denen jeweils ein innenliegendes Rad angeordnet ist, angeordnet. Die Radaufnahme für das außenliegende Radpaar ist vorteilhafterweise die original im Fahrzeug verbaute Radaufnahme, an der das Rad mittels Radschrauben befestigt ist. Die Radträgerelemente haben jeweils eine Länge, um das daran jeweils angeordnete innenliegende Rad entsprechend nah an dem anderen Rad anzuordnen, dass die beiden Räder als ein einziges Rad zulassungsrechtlich erachtet werden.

Bevorzugt umfassen die Radträgerelemente einen ersten Befestigungsabschnitt zur Befestigung an einer Radaufnahme. Der Befestigungsabschnitt kann Öffnungen für eine Verschraubung über die Bolzen für die Radschrauben umfassen.

Ferner bevorzugt umfassen die Radträgerelemente einen zweiten Befestigungsabschnitt zur Befestigung eines Rads. Am Befestigungsabschnitt kann jeweils ein Rad des innenliegenden Radpaares befestigt werden.

Vorteilhafterweise ist an dem zweiten Befestigungsabschnitt eine Bremseinheit angeordnet.

Gemäß einem vorteilhaften Aspekt umfasst das Radträgerelement einen starren Zwischenabschnitt zur Verbindung von dem ersten Befestigungsabschnitt und dem zweiten Befestigungsabschnitt. Der Zwischenabschnitt kann ein Stahlprofil entsprechender Länge sein.

Gemäß einem weiteren Aspekt umfasst die Erfindung ferner eine Umrüsteinheit für ein Fahrzeug mit zumindest einem Radträgerelement zur Anordnung an einer originalen Hinterachse.

Vorteilhafterweise umfasst dabei das Radträgerelement einen ersten und zweiten Befestigungsabschnitt. Die beiden Befestigungsabschnitte können über einen Zwischenabschnitt verbunden sein.

Die Erfindung wird im Folgenden anhand des in den Zeichnungen dargestellten Beispiels zusätzlich erläutert.

Es zeigen:
- Fig. 1: schematische Draufsicht auf ein dreirädriges Fahrzeug gemäß einem Ausführungsbeispiel der Erfindung;
- Fig. 2: Rückansicht auf das dreirädrige Fahrzeug aus Fig. 1;
- Fig. 3: perspektivische Detailansicht auf ein an der Hinterachse befestigtes Radträgerelement in dem Fahrzeug aus Fig. 1;
- Fig. 4: weitere perspektivische Detailansicht auf das Radträgerelement aus Fig. 3 mit einem zweiten Befestigungsabschnitt; und
- Fig. 5: weitere perspektivische Detailansicht auf das Radträgerelement aus Fig. 3 mit einem ersten und zweiten Befestigungsabschnitt.

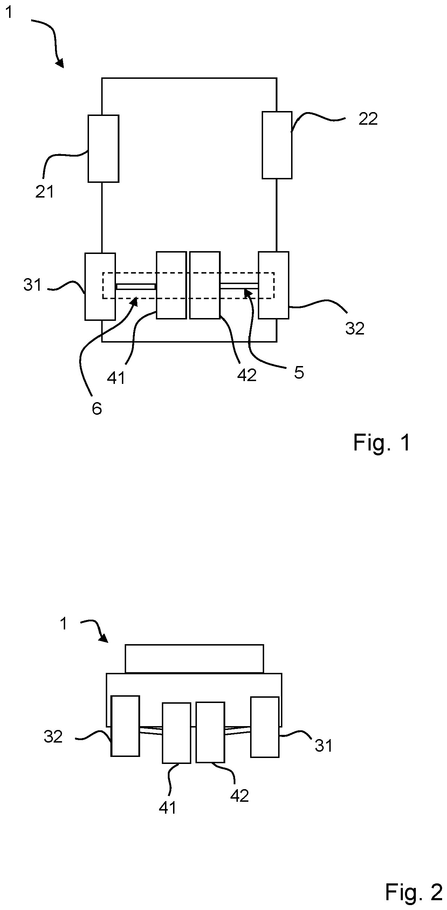

In **Fig. 1** ist eine schematische Draufsicht auf ein dreirädriges Fahrzeug 1 gemäß einem Ausführungsbeispiel der Erfindung gezeigt. Das Fahrzeug war ursprünglich vierrädrig und wurde unter Beibehaltung bzw. ohne Ausbau der originalen Hinterachse oder eines Hinterachsträgers umgerüstet.

Das dreirädrige Fahrzeug 1 hat im oberen Bereich zwei Vorderräder 21, 22. Im unteren Bereich liegt eine Hinterachseinheit 6, an der außenseitig jeweils ein Rad eines außenliegenden Radpaares 31, 32 befestigt ist. Das außenliegende Radpaar (bzw. jedes Stützrad) ist in einem Abstand gegenüber einer geraden Untergrundfläche, wenn das Fahrzeug auf den innenliegenden Rädern abgestellt ist, angeordnet, der ausreicht, um zulassungsrechtlich nicht als Rad (Fahrzeugrad) zu gelten. Bevorzugt ist das außenliegende Radpaar in einem Abstand im Bereich von 1 cm bis 20 cm, insbesondere im Bereich von 6 cm bis 10 cm, angeordnet.

An der (originalen) Hinterachseinheit 6 ist innenseitig mittels Radträgerelement 5 ein innenliegendes Radpaar 41, 42 angeordnet, welches einen geringen Abstand zueinander hat, um zulassungsrechtlich als ein einziges Rad zu gelten. Der Abstand der jeweiligen Laufflächen(-mittelachsen) liegt vorteilhafterweise im Bereich von 20 cm bis 50 cm, insbesondere im Bereich von 30 cm bis 46 cm.

In **Fig. 2** ist eine Rückansicht auf das dreirädrige Fahrzeug 1 aus Fig. 1 dargestellt, in der die Vorderräder nicht zu sehen sind.

In dieser Darstellung ist gut zu sehen, dass das außenliegende Radpaar 31, 32 einen Abstand zum Untergrund hat, um gegenüber dem innenliegenden Radpaar 41, 42 erhöht zu sein. Bei entsprechendem Abstand gelten diese Räder nicht als Fahrzeugräder, sind aber gleichzeitig zur Abstützung in einer Unfallsituation geeignet.

Ebenfalls gut erkennbar ist das innenliegende Radpaar 41, 42 mit einem geringen Abstand der Laufflächen zueinander angeordnet. Damit gelten diese Räder (vergleichbar mit Zwillingsreifen) als ein Rad im Sinne der Zulassungsverordnung.

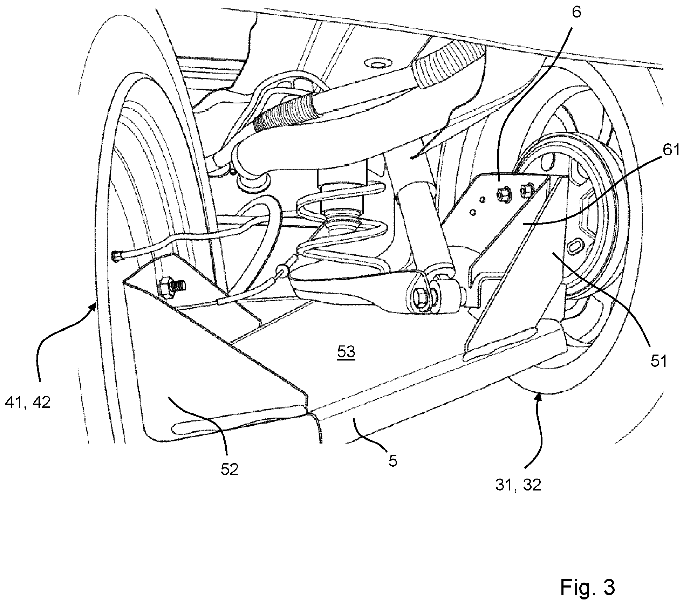

In **Fig. 3** ist eine perspektivische Detailansicht auf ein an der Hinterachse (des originalen vierrrädrigen Fahrzeugs) befestigtes Radträgerelement 5 in dem Fahrzeug aus Fig. 1 dargestellt.

Dabei ist an der Hinterachseinheit 6 eine Radaufnahme 61 für das außenliegende Radpaar 31, 32 gezeigt.

An dem gezeigten Radträgerelement 5 ist ein innenliegendes Rad 41, 42 angeordnet, indem das Radträgerelement 5 mit einem ersten Befestigungsabschnitt 51 an der Radaufnahme 61 der Hinterachseinheit 6 befestigt ist und an dem zweiten Befestigungsabschnitt 52 jeweils ein Rad des innenliegenden Radpaares 41, 42 befestigt ist. Der erste Befestigungsabschnitt 51 und der zweite Befestigungsabschnitt 52 sind über einen starren Zwischenabschnitt 53 verbunden.

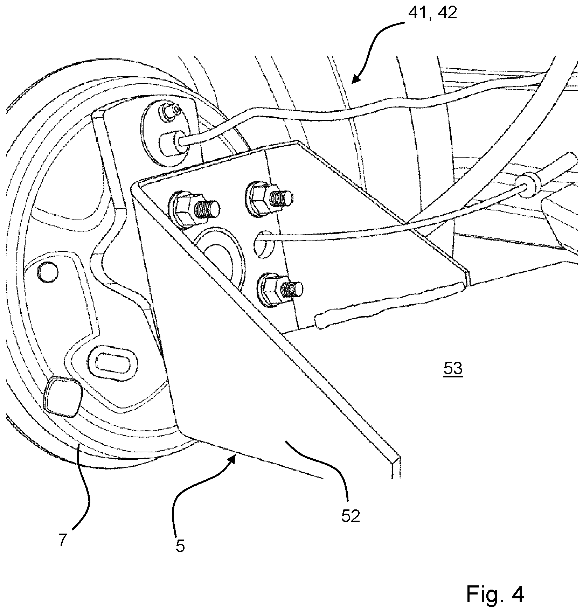

In **Fig. 4** ist eine weitere perspektivische Detailansicht auf das Radträgerelement 5 aus Fig. 3 dargestellt, wobei der zweite Befestigungsabschnitt 52 im Detail zu sehen ist. Der zweite Befestigungsabschnitt 52 ist an dem starren Zwischenabschnitt 53 angeschweißt. Der zweite Befestigungsabschnitt 52 umfasst einen nach außen gerichteten Flächenabschnitt, der sich im Wesentlichen senkrecht nach oben erstreckt. An dem Flächenabschnitt ist das innenliegende Rad 41, 42 mittelbar über eine Bremseinheit 7 (z. B. Trommelbremse für die Handbremse) angeordnet.

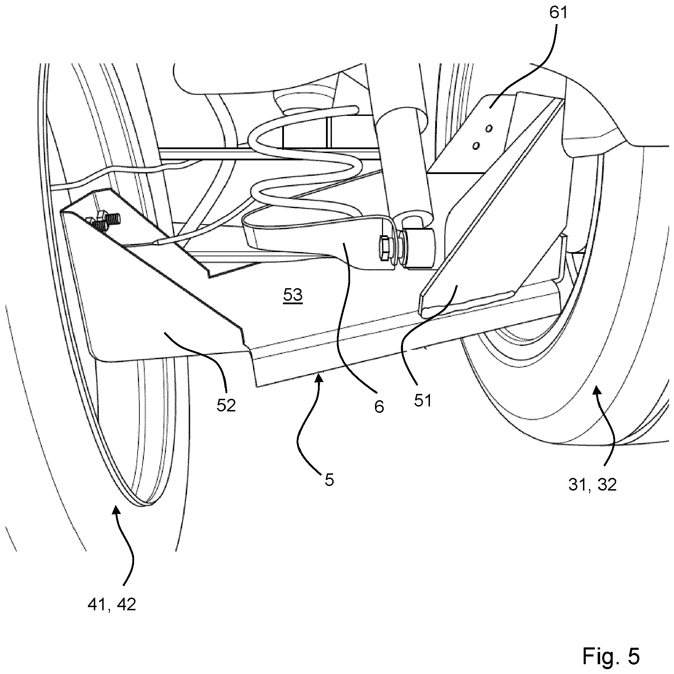

In **Fig. 5** ist eine weitere perspektivische Detailansicht auf das Radträgerelements 5 aus Fig. 3 mit einem ersten und zweiten Befestigungsabschnitt 51, 52 dargestellt.

Dabei ist eine Radaufnahme 61 für das außenliegende Radpaar 31, 32 gezeigt.

An dem gezeigten Radträgerelement 5 ist ein innenliegendes Rad 41, 42 angeordnet, indem das Radträgerelement 5 mit einem ersten Befestigungsabschnitt 51 an der Radaufnahme 61 der Hinterachseinheit 6 befestigt ist und an dem zweiten Befestigungsabschnitt 52 jeweils ein Rad des innenliegenden Radpaares 41, 42 befestigt ist. Der erste Befestigungsabschnitt 51 und der zweite Befestigungsabschnitt 52 sind über einen starren Zwischenabschnitt 53 verbunden. Vorteilhafterweise kann ein starrer Zwischenabschnitt verwendet werden, weil die Hinterachseinheit 6 mit einem Federelement ausgestattet ist.

## Patentansprüche

1. Dreirädriges Fahrzeug (1) mit zwei Vorderrädern (21, 22) und einer Hinterachseinheit (6) zur Befestigung eines außenliegenden Radpaares (31, 32), welches jeweils in einem Abstand zum Untergrund angeordnet ist, um zulassungsrechtlich nicht als Rad zu gelten, und eines innenliegenden Radpaares (41, 42), welches einen geringen Abstand zueinander hat, um zulassungsrechtlich als ein einziges Rad zu gelten.

2. Dreirädriges Fahrzeug (1) nach Anspruch 1, wobei das außenliegende Radpaar (31, 32) in einem Abstand im Bereich von 1 cm bis 20 cm, insbesondere im Bereich von 6 cm bis 10 cm, zum Untergrund angeordnet ist.

3. Dreirädriges Fahrzeug (1) nach Anspruch 1 oder 2, wobei das innenliegende Radpaar (41, 42) in einem Abstand der Laufflächen im Bereich von 20 cm bis 50 cm, insbesondere im Bereich von 30 cm bis 46 cm, zum Untergrund angeordnet ist.

4. Dreirädriges Fahrzeug (1) nach einem der vorangehenden Ansprüche, wobei an der Hinterachseinheit (6) eine Radaufnahme (61) für das außenliegende Radpaar (31, 32) und zwei Radträgerelemente (5), an denen jeweils ein innenliegendes Rad (41, 42) angeordnet ist, umfasst.

5. Dreirädriges Fahrzeug (1) nach Anspruch 4, wobei die Radträgerelemente (5) einen ersten Befestigungsabschnitt (51) zur Befestigung an einer Radaufnahme (61) umfassen.

6. Dreirädriges Fahrzeug (1) nach Anspruch 4 oder 5, wobei die Radträgerelemente (5) einen zweiten Befestigungsabschnitt (52) zur Befestigung eines innenliegenden Rads (41, 42) umfassen.

7. Dreirädriges Fahrzeug (1) nach Anspruch 6, wobei an dem zweiten Befestigungsabschnitt (52) eine Bremseinheit (7) angeordnet ist.

8. Dreirädriges Fahrzeug (1) nach einem der vorangehenden Ansprüche, wobei das Radträgerelement (5) einen starren Zwischenabschnitt (53) zur Verbindung von dem ersten Befestigungsabschnitt (51) und dem zweiten Befestigungsabschnitt (52) umfasst.

9. Umrüsteinheit für ein Fahrzeug mit zumindest einem Radträgerelement (5) zur Anordnung an einer originalen Hinterachse.

10. Umrüsteinheit für ein Fahrzeug nach Anspruch 9, wobei das Radträgerelement (5) einen ersten Befestigungsabschnitt (51) zur Befestigung an einer Radaufnahme (61) und zweiten Befestigungsabschnitt (52) zur Befestigung eines Rads (41, 42) umfasst.
